# EUROPEAN PATENT APPLICATION

(11) **EP 4 535 254 A1**
(43) Date of publication of application: **09.04.2025**
(21) Application number: 24204748.8
(22) Date of filing: 04.10.2024
(51) Int. Cl.: G06Q 10/08

(54) **A METHOD AND A SYSTEM FOR TRACKING PHARMACEUTICAL PRODUCTS TO END-USERS UP TO POINT OF CONSUMPTION**

(30) Priority: 06.10.2023 EP 23202223
(71) Applicant: Controlant hf., 201 Kopavogur (IS)
(72) Inventor: HERJOLFSSON, Gisli, 210 Kopavogur (IS)
(74) Representative: Inspicos P/S

(57) **Abstract**

This invention relates to a method and a system for real time position tracking of a shipment of an asset, where the asset is arranged in tree-like fashion from a primary package level down to at least one secondary package level, where each of the at least one secondary package level comprises multiple of sub-packages, comprising:
• associating a first logger device to the asset at the primary package level,
• associating a second logger device to each of the sub-packages, where the logger devices comprise a communication module configured to transmit position data to an external control computer,
wherein the method further comprises:
• turning the first logger device on during the transport of the primary package from an origin location to a first destination location while the second logger devices are in sleep-mode, where at the first destination location the primary package level is at least partialy unpacked into the at least one secondary package level, and
• triggering the second logger devices in sub-packages unpacked from the primary package level to be turned from sleep-mode to active mode and thus enabling a real-time position tracking on each of the sub-packages.

## Description

### FIELD OF THE INVENTION

The present invention relates to method a system for tracking pharmaceutical products to end-users up to point of consumption.

### BACKGROUND OF THE INVENTION

With the expansion and growth of global sourcing in a supply chain, more prevalent interest has been placed on automatic monitoring of time and of environment related parameters to increase food and drug safety and improve food defense systems throughout all areas of production, processing, storage and transportation and operations. Food and drug require proper handling of environment related parameters such as temperature during transport to assure shelf quality, longevity, and safety.

Logger devices are electronic monitoring devices commonly used for these purposes, namely, to be associated to assets such as food, beverages or drugs to automatically monitor and record various environmental related parameters of the assets throughout a supply chain, such as temperature, humidity, acceleration, and air pressure, over time. A recent example of importance of such logger devices is the temperature monitoring of the COVID-19 vaccines, which is a key critical monitoring parameter.

The supply chain contains different transport legs, such as a primary transport leg where a primary distribution from manufacturing facility to regional distribution site takes place, a secondary transport leg where secondary distribution from the regional distribution site to e.g. local market distribution takes place, and last mile transport leg where last mile distribution from the regional distribution to pharmacies, hospitals or direct to patient takes place.

Serialization on pharmaceutical products has been forced on the pharmaceutical industry. Despite that the pharmaceutical industry does not have full tracking from manufacturing to patient or pharmacy/hospitals (end-to-end) in their supply chain. Even though it is somewhat solving possible counterfeit within supply chain (wholesale to pharmacy) it is not solving any other issues. Patients access to a pharmaceutical product data such as stability budget which would extend the patient protection is currently not available. Therefore, giving the pharmaceutical industry more access to data during the transport within the supply chain would better protect against counterfeit, illegal parallel importing and give more visibility.

Currently, visibility of the pharmaceutical product during the transport within the supply chain is limited beyond primary distribution. Today, there is about 40% forecasting accuracy that leads to higher safety stocks and write offs, higher cost, suboptimal production capacity, higher CO₂ footprint. Getting more data points in the supply chain and to a point of consumption would thus significantly improve forecast accuracy.

Wholesalers are reluctant to provide data to pharmaceutical industry as they don't see the benefits but hypothetically the pharmaceutical industry could know stock levels in each market but don't.

There is thus a need for an improved way of enhancing the visibility of the pharmaceutical product during the transport within the supply chain.

### SUMMARY OF THE INVENTION

It is an object of the invention to overcome the above mentioned drawbacks by providing an end-to-end visibility for pharmaceutical products while being transported within the supply chain, irrespective of number of transport legs.

In general, the invention preferably seeks to mitigate, alleviate or eliminate one or more of the above-mentioned disadvantages of the prior art singly or in any combination. In particular, it may be seen as an object of embodiments of the present invention to enhance the data visibility for the pharmaceutical product during the transport in a supply chain and provide a method and a system that solves the above-mentioned problems, or other problems.

To better address one or more of these concerns, in a first aspect of the invention a method of real time position tracking of a shipment of an asset is provided, where the asset is arranged in tree-like fashion from a primary package level down to at least one secondary package level, where each of the at least one secondary package level comprises multiple of sub-packages, comprising:
- associating a first logger device to the asset at the primary package level,
- associating a second logger device to each of the sub-packages, where the logger devices comprise a communication module configured to transmit position data to an external control computer,
wherein the method further comprises:
- turning the first logger device on during the transport of the primary package from an origin location to a first destination location while the second logger devices are in sleep-mode, where at the first destination location the primary package level is at least partialy unpacked into the at least one secondary package level, and
- triggering the second logger devices in sub-packages unpacked from the primary package level to be turned from sleep-mode to active mode and thus enabling a real-time position tracking on each of the sub-packages.

The primary package level may as an example be a single packing selected from: a pallet, a container, a container containing multiple of pallets. The at least one secondary package level may be multiple of levels, such as but not limited to, case level as a first secondary level, carton level as a second secondary level etc..

The term sleep-mode may according to the present invention be understood as a low-power state mode where most of the logger device's functions are paused, but is not fully turned off and thus allows it to be restarted quickly and return to full functionality when needed. Sleep-mode is also known as standby or low-power mode that allows the logger device to conserve energy by reducing its power consumption when it's not in active use.

In an embodiment, the sub-packages are provided with unique identification (ID) code uniquely identifying the logger devices in the sub-packages and comprise information related to a destination of the individual sub-packages. The unique ID may in an embodiment comprise barcode or Quick Response (QR) code comprising at least one of: serialization identifier, Product identifier (GTIN), expiration date identifier, Batch/Lot number identifier. Each secondary package level may have the same Product identifier (GTIN). Referring to the example above, the case level has the same GTIN number, the carton level has the same GTIN number, but which is different from the case level GTIN number. In that way, a unique ID tree is provided via the GTIN numbers starting with e.g. the GTIN number for pallet level, under that level are the case level GTIN number, and under the case packings are the carton level GTIN number etc..

Accordingly, by having only the first logger device turned on while the remaining second logger devices are in sleep mode, the energy consumption of the second logger devices may be minimized. Thus, the second logger devices may be of different type having smaller power source than the first logger device which may be more powerful power source and be better suited from long distances such as over sea where the transport can take few weeks. The second logger devices may be a so-called Internet of Things (IoT) labels, sometimes also referred to as smart labels, and comprise ultrathin bendable batteries such as a ZincPoly solid-state battery, a communication, a memory and processor, where the thickness may be few millimeters and the surface size may be within the range of a credit card size.

In another embodiment, the first and the second logger devices are of the same type.

The start of the shipment mas as an example be from a manufacturing and/or packaging side and where the first destination location may be a distribution center. This may also be seen as a primary transport leg within the supply chain. By activating the second logger devices, tracking on a case level, carton level etc. is thus possible in real time.

In an embodiment, the information related to a destination of the individual sub-packages is utilized as a trigger in uniquely selecting tracking profiles for the second logger devices. This data may be acquired by scanning the sub-packages, e.g. via said QR code, where data related to the destination is obtained, and based thereon some sub-packages may have different tracking profiles. One tracking profile may communicate with the external control computer every hour, whereas another tracking profile may communication every three hours. This might be the case where the distance from the scanning location differs significantly. Other examples of tracking profiles is communicating only when the logger device is stationary, or when moving.

In an embodiment, the method further comprises measuring at least one environment related parameter of the asset, where the communication module is further configured to transmit the measured at least one environment related parameter to the external control computer. The at least one environment related parameter may as an example be selected from: the temperature of the asset, humidity, pressure, light intensity and other parameters that may affect the quality of the asset.

In an embodiment, the step of triggering the second logger devices in the sub-packages to be turned-on is generated when the first logger device is within a given coordinate position at or around the destination location, or when the shipment of the primary package is completed.

In an embodiment, the primary package at the first destination location is partially unpacked where a portion of the sub-packages is removed from the primary package. Also, subsequent to partially unpack a portion of the sub-packages from the primary package the first logger device is continued to be turned on during the transport from the first destination location to a second destination location, while the remaining second logger devices not being removed from the primary package are in sleep-mode.

In an embodiment, the unique ID comprises GS1 code in a form of a barcode or Quick Response (QR) code or data matrix code comprising at least one of: serialization identifier, Product identifier (GTIN), expiration date identifier, Batch/Lot number identifier.

The step of associating the asset in tree-like fashion from a primary package level down to at least one secondary package level may be arranged such that each level selected from the at least one secondary package level is identified with the same GTIN code. Moreover, the primary packing level which may be a pallet may be assigned with a unique GTIN code, or in case of several pallets, each of the pallets is assigned with the same GTIN code.

In a second aspect of the invention, a system is provided for a real time position tracking of a shipment of an asset, where the asset is arranged in tree-like fashion from a primary package level down to at least one secondary package level, where each of the at least one secondary package level comprises multiple of sub-packages, comprising:
- first logger device comprising a communication module configured to transmit position data to an external control computer, where the first logger device is arranged to the asset at the primary package level,
- multiple of second logger devices, each comprising a communication module for transmitting position data of each of the second logger devices to the external control computer, and each being arranged with a sub-package selected from the sub-packages,
- a first processing unit configured to operate the first and the multiple of second logger devices, including turning the first logger device on during a transport of the primary package from an origin location to a first destination location while the second logger devices are in sleep-mode, where at the first destination location the primary package level is at least partialy unpacked into the at least one secondary package level, and
- a second processing unit configured to trigger the second logger devices in the sub-packages that are unpacked from the primary package level from sleep-mode to active mode and thus enabling a real-time position tracking on each of the sub-packages.

In an embodiment, the first processing unit is the same as the second processing unit. In another embodiment, the first processing unit is comprised in the first logger device and where the second processing unit is comprised in an external control computer.

In an embodiment, the multiple of second logger devices further comprise at least one sensing unit to measure at least one environmental parameter of the asset, and where the communication module is further configured to transmit the measured at least one environmental related parameter.

In general the various aspects of the invention may be combined and coupled in any way possible within the scope of the invention. These and other aspects, features and/or advantages of the invention will be apparent from and elucidated with reference to the embodiments described hereinafter.

### LIST OF NUMBERED EMBODIMENTS

1. A method of real time position tracking of a shipment of an asset, where the asset is arranged in tree-like fashion from a primary package level down to at least one secondary package level, where each of the at least one secondary package level comprises multiple of sub-packages, comprising:
   - associating a first logger device to the asset at the primary package level,
   - associating a second logger device to each of the sub-packages, where the logger devices comprise a communication module configured to transmit position data to an external control computer,
   wherein the method further comprises:
   - turning the first logger device on during the transport of the primary package from an origin location to a first destination location while the second logger devices are in sleep-mode, where at the destination location the primary package level is at least partialy unpacked into the at least one secondary package level, and
   - triggering the second logger devices in sub-packages unpacked from the primary package level to be turned from sleep-mode to active mode and thus enabling a real-time position tracking on each of the sub-packages.
2. The method according to embodiment 1, wherein the primary package level is a single packing selected from: a pallet, a container, a container containing multiple of pallets.
3. The method according to embodiment 1 or 2, wherein the sub-packages are provided with unique identification (ID) code uniquely identifying the logger devices in the sub-packages and comprise information related to a destination of the individual sub-packages.
4. The method according to embodiment 3, wherein the information related to a destination of the individual sub-packages is utilized as a trigger in uniquely selecting tracking profiles for the second logger devices.
5. The method according to any of the preceding embodiments, further comprising measuring at least one environment related parameter of the asset, where the communication module is further configured to transmit the measure at least one environment related parameter to the external control computer.
6. The method according to any of the preceding embodiments, wherein the step of triggering the second logger devices in the sub-packages to be turned-on is generated when the first logger device is within a given coordinate position at or around the destination location, or when the shipment of the primary package is completed.
7. The method according to any of the preceding embodiments, wherein the second logger devices are bendable logger devices comprising a bendable battery.
8. The method according to embodiment 7, wherein the first logger device is different from the second logger devices.
9. The method according to any of the preceding embodiments, wherein the primary package at the first destination location is partially unpacked where a portion of the sub-packages is removed from the primary package.
10. The method according to embodiment 9, wherein subsequent to partially unpack a portion of the sub-packages from the primary package the first logger device is continued to be turned on during the transport of the first destination location to a second destination location, while the remaining second logger devices not being removed from the primary package are sleep-mode.
11. The method according to any of the preceding embodiments, wherein the unique ID comprises barcode or Quick Response (QR) code comprising at least one of: serialization identifier, Product identifier (GTIN), expiration date identifier, Batch/Lot number identifier.
12. The method according to embodiment 11, wherein the step of associating the asset in tree-like fashion from a primary package level down to at least one secondary package level, where each level selected from the at least one secondary package level is identified with the same GTIN code.
13. A system for a real time position tracking of a shipment of an asset, where the asset is arranged in tree-like fashion from a primary package level down to at least one secondary package level, where each of the at least one secondary package level comprises multiple of sub-packages, comprising:
   - first logger device comprising a communication module configured to transmit position data to an external control computer, where the first logger device is configured to be arranged to the asset at the primary package level,
   - multiple of second logger devices, each comprising a communication module for transmitting position data of each of the second logger devices to the external control computer,
   - a first processing unit configured to operate the first and the multiple of second logger devices, where the processing includes turning the first logger device on during a transport of the primary package from an origin location to a first destination location while the second logger devices are sleep-mode, where at the destination location the primary package level is at least partialy unpacked into the at least one secondary package level, and
   - a second processing unit configured to trigger the second logger devices in sub-packages unpacked from the primary package level to be turned from sleep-mode to active mode and thus enabling a real-time position tracking on each of the sub-packages.
14. The system according to embodiment 13, wherein the first processing unit is the same as the second processing unit, or wherein the first processing unit is comprised in the first logger device and where the second processing unit is comprised in an external control computer.
15. The system according to embodiment 13 or 14, wherein the multiple of second logger devices further comprise at least one sensing unit to measure at least one environmental parameter of the asset, and where the communication module is further configured to transmit the measured at least one environmental related parameter.

### BRIEF DESCRIPTION OF THE DRAWINGS

Embodiments of the invention will be described, by way of example only, with reference to the drawings, in which
Figure 1 shows a flowchart of an embodiment of a method according to the present invention,
Figure 2 shows a system according to the present invention,
Figure 3 shown an example of a second logger device which in this case it is Internet of Thing (IoT) label,
Figure 4 shows an example of different packing levels starting from a primary packing level,
Figure 5 shows a GTIN tree like structure, and
Figure 6 illustrates schematically an implementation of the invention discussed in previous figures.

### DESCRIPTION OF EMBODIMENTS

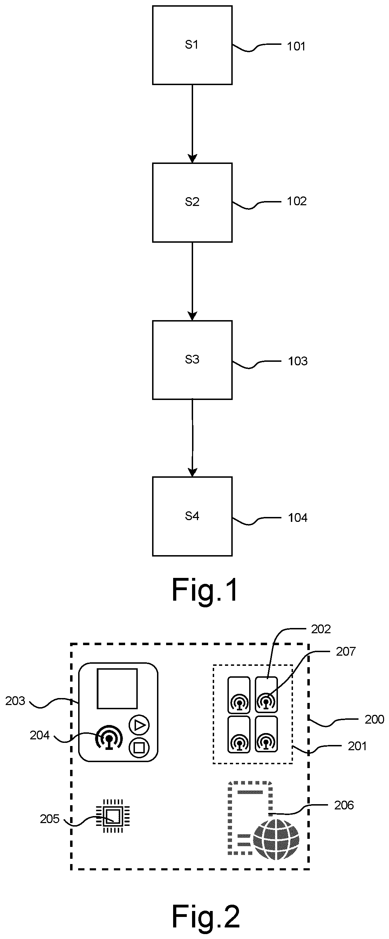

Figure 1 shows a flowchart of a method according to the present invention of a of real time position tracking of a shipment of an asset, where the asset is arranged in tree-like fashion from a primary package level down to at least one secondary package level, where each of the at least one secondary package level comprises multiple of sub-packages.

In a first step S 1 101, a first logger device is arranged to the asset at the primary package level. The asset at this level may as an example be a pallet containing pharmaceutical products.

In second step S2 102, a second logger device is arranged to each of the sub-packages, where the logger devices comprise a communication module configured to transmit position data to an external control computer.

In a third step S3 103, this first logger device is turned on during the transport of the primary package from an origin location to a first destination location while the second logger devices are in sleep-mode. The first destination location may be where the primary package level is at least partially unpacked into the at least one secondary package level, meaning that the primary package may be completely unpacked, or partially unpacked.

In case where at the primary package level only some of the packages are unpacked into the at least one secondary package level, the remaining primary package containing packages that were not unpacked may continue to a second destination location, where the above-mentioned steps are continued, and where the remaining sub-packages not being removed from the primary package level continue to stay in sleep mode.

A fourth step S4 104 includes triggering the second logger devices in the sub-packages that are unpacked from the primary package level to be turned from sleep-mode to active mode and thus enabling a real-time position tracking on each of the sub-packages. This may be based on a destination data which may be transmitted by the first logger device, where the destination data is used as a trigger. The trigger may as an example be where the asset is within a given geofence around the first destination location, e.g. 500m or 1000m around the first destination location.

In an embodiment, the second logger devices may be provided with different tracking profiles, e.g. depending on the destination location of the second logger devices. This may also be based on scanning events where an operator at the first destination scans each individual sub-package removed from the primary package, where the data obtained from the scanning contains unique ID, e.g. a serial code of the second logger device, which the external control computer can link to the final destination of the second logger device.

The primary package level may be a single packing selected from: a pallet, a container, a container containing multiple of pallets, just to mention few examples. As mentioned above, the sub-packages may be provided with unique identification (ID) code uniquely identifying the logger devices in the sub-packages and comprise information related to a destination of the individual sub-packages.

The first and/or the second logger devices may further be configured to measure at least one environment related parameter of the asset during the transport, e.g. temperature, humidity, light and where the communication module may further be configured to transmit the measured at least one environment related parameter to the external control computer.

Figure 2 depicts a block diagram of a system 200 according to the present invention for a real time position tracking of a shipment of an asset, where the asset is arranged in tree-like fashion from a primary package level down to at least one secondary package level, where each of the at least one secondary package level comprises multiple of sub-packages. The asset may be any kind of merchandise such as pharmaceutical product, food product, beverages, and any other type of merchandise that is sensitive and requires proper handling during the transport throughout the supply chain.

The system comprises a first logger device 203 comprising a communication module such as an antenna 204 configured to transmit position data to an external control computer 206. The first logger device is configured to be arranged to the asset at the primary package level, e.g. configured to be attached to an outer surface of the primary package.

The system further comprises multiple of second logger devices 201 which may be placed within the sub-packages, each 202 comprising a communication module 207 for transmitting position data of each of the second logger devices 202 to the external control computer 208.

The system further comprises a first processing unit 205 configured to operate the first and the multiple of second logger devices, where the processing includes turning the first logger device on during a transport of the primary package from an origin location to a first destination location while the second logger devices are in sleep-mode. At the destination location the primary package level is at least partially unpacked into the at least one secondary package level.

The system further comprises a second processing unit 206, which may be comprised in the external control computer, where second processing unit is configured to trigger the second logger devices in sub-packages that have been unpacked from the primary package level from being in sleep-mode to active mode and thus enabling a real-time position tracking on each of the sub-packages.

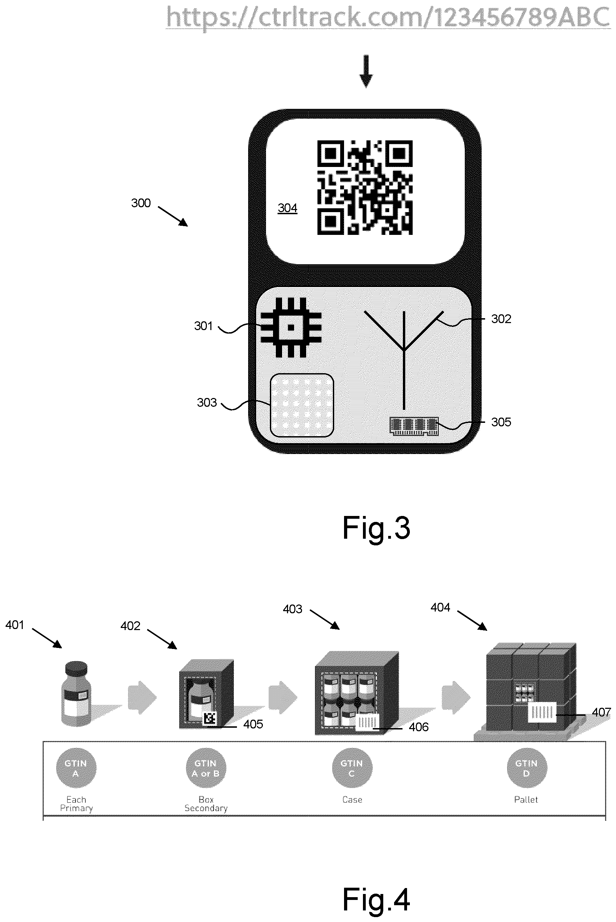

Figure 3 shown an example of a second logger device 300 which in this case it is Internet of Thing (IoT) label, or "smart-label" or a logger device card, which height and width is similar to a credit card, and the thickness is only few millimeters. Such logger devices have a power source or a battery that is ultra-thin flexible battery, e.g. a ZincPoly solid-state battery. As shown here, the logger device card is uniquely identified via a QR code 304 and comprises electrical components such as a processor 301, battery 303, transmitter 302 and a memory 305.

Figure 4 shows an example of different packing levels, starting with primary packing 401, a secondary box packing 402 where the packing is uniquely identified with a GS1 QR code data matrix 405, same applies with the case packing 403 that is uniquely identified with QR code data matrix 406, and the largest packing shown is on a pallet level 404 that is uniquely identified with a GS1 QR code data matrix 407.

Within each packing level the Product identifier (GTIN) (Global Trade Item Number) is the same. The secondary box packings as an example have the same GTIN identifier but which is different from the one for the secondary box packing, and the pallet packings 404 have the same Product identifier (GTIN) but different from the previous ones.

Within the case packing 403, there are several secondary box packings 402 that are uniquely identified with a GS1 QR code data matrix, and same applies for the pallet that contains multiple of case packings 403 all of which are uniquely identified with a GS1 QR code data matrix, where as discussed, each case packing contains multiple of secondary box packings 402 which are also uniquely identified with a GS1 QR code data matrix.

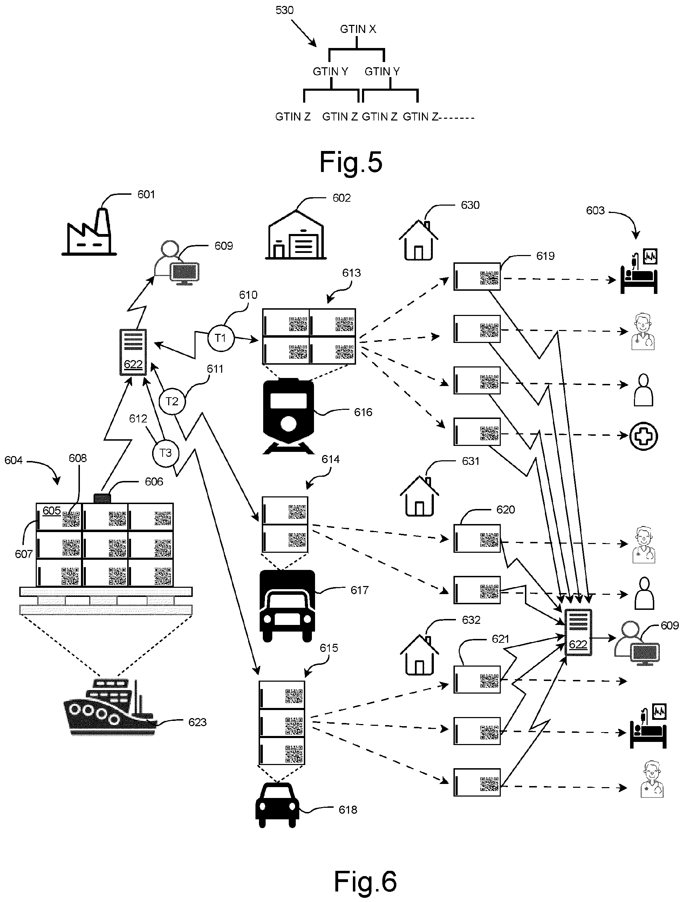

Accordingly, a unique ID tree 530 is provided as depicted in figure 5, starting e.g. with the pallet level GTINX, under that level are the case packings GTINY, and under the case packings are the secondary box packings GTINZ. In this way, a unit level tracking becomes possible.

Figure 6 illustrates schematically an implementation of the invention discussed in previous pictures starting from an origin location 601 (e.g., manufacturing/packaging side), to a first destination location 602 which may be a first distribution centre, to a second distribution centre 630, up to final destination 603 which may be point of consumption by a patent, a pharmacy, hospital, health centre etc..

The primary packet level of the asset shown here is a pallet 604 containing multiple of sub-packages or boxes 605 and a first logger device 606. As discussed in relation to figure 5, the GTIN X level corresponds to the pallet level, GTIN Y corresponds to first level of sub-packages, and the GTIN Z level corresponds to sub-sub-packages arranged in the boxes 605 (not shown) which could e.g. be a carton level.

Each of the sub-packages 605 comprise a second logger device 607, e.g. said IoT/smart label placed in the packaging and in this example each sub-package has a QR code 608 on the outer side. The first transport leg shown here is where the pallet 604 is shipped by a ship 623 to the first destination location 602.

During this first leg transport, the first logger device 606 communicates with an external control computer 622, where the communication includes at least position data of the primary asset 605 on a regular basis, while the second logger devices 607 are in sleep mode. The communication may further include environmental related data such as the temperature of the asset, the humidity, shock or tilting etc..

Upon arrival at the first destination location 602 the primary asset 604, or the pallet, is unpacked into three smaller shipments 613, 614, 615 that are further distributed by three vehicles 616, 617, 618 to another distribution centres 630, 631, 632. Moreover, at this location the second logger devices are activated from the sleep-state to active state. This is triggered automatically based e.g. the location of the first logger device 606, where the location may be received by the external control computer 602 that performs the activation process.

In an embodiment, the control computer 622 may further issue different tracking profiles 610, 611, 612 for the three smaller shipments 613, 614, 615 depending amongst others on the location to the distribution centres 630, 631, 632. These different tracking profiles may as an example have different communication frequency, where second logger devices transmit at least position data, with the external control computer 622, where e.g. the longer the distance is the lower is the communication frequency and vice versa.

During the transport by the three transport means 616, 617, 618 a single logger may transmit the data to the control computer 622 or the second logger devices belonging to each shipment 613-615 may transmit in an intelligent manner, e.g. as a staggered wakeup, where the second logger devices "spread" the communication evenly to ensure that they are not transmitting at the same time as an example.

From the distribution centres 630, 631, 632 the sub-packages in each of the shipment 613-615 are finally distributed to the final end-destination as mentioned above 603, where each logger device is active and communicates with the external control computer 622 and thus a unite level tracking is enabled up to the end-customer 603.

The data related to the whole transport of the asset throughout the supply chain may thus at all times be accessible by the owner of the asset 609, and/or logistics provider or by a third party.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of real time position tracking of a shipment of an asset, where the asset is arranged in tree-like fashion from a primary package level down to at least one secondary package level, where each of the at least one secondary package level comprises multiple of sub-packages, comprising:
• associating a first logger device to the asset at the primary package level,
• associating a second logger device to each of the sub-packages, where the logger devices comprise a communication module configured to transmit position data to an external control computer,
wherein the method further comprises:
• turning the first logger device on during the transport of the primary package from an origin location to a first destination location while the second logger devices are in sleep-mode, where at the first destination location, the primary package level is at least partialy unpacked into the at least one secondary package level, and
• triggering the second logger devices in sub-packages unpacked from the primary package level to be turned from sleep-mode to active mode and thus enabling a real-time position tracking on each of the sub-packages.

2. The method according to claim 1, wherein the primary package level is a single packing selected from: a pallet, a container, a container containing multiple of pallets.

3. The method according to claim 1 or 2, wherein the sub-packages are provided with unique identification (ID) code uniquely identifying the logger devices in the sub-packages and comprise information related to a destination of the individual sub-packages.

4. The method according to claim 3, wherein the information related to a destination of the individual sub-packages is utilized as a trigger in uniquely selecting tracking profiles for the second logger devices.

5. The method according to any of the preceding claims, further comprising measuring at least one environment related parameter of the asset, where the communication module is further configured to transmit the measure at least one environment related parameter to the external control computer.

6. The method according to any of the preceding claims, wherein the step of triggering the second logger devices in the sub-packages to be turned-on is generated when the first logger device is within a given coordinate position at or around the destination location, or when the shipment of the primary package is completed.

7. The method according to any of the preceding claims, wherein the second logger devices are bendable logger devices comprising a bendable battery.

8. The method according to claim 7, wherein the first logger device is different from the second logger devices.

9. The method according to any of the preceding claims, wherein the primary package at the first destination location is partially unpacked where a portion of the sub-packages is removed from the primary package.

10. The method according to claim 9, wherein subsequent to partially unpack a portion of the sub-packages from the primary package the first logger device is continued to be turned on during the transport of the first destination location to a second destination location, while the remaining second logger devices not being removed from the primary package are in sleep-mode.

11. The method according to any of the preceding claims, wherein the unique ID comprises barcode or Quick Response (QR) code comprising at least one of: serialization identifier, Product identifier (GTIN), expiration date identifier, Batch/Lot number identifier.

12. The method according to claim 11, wherein each level tree-like fashion from the primary package level down to the at least one secondary package level is identified with the same Global Trade Item Number (GTIN) code.

13. A system for a real time position tracking of a shipment of an asset, where the asset is arranged in tree-like fashion from a primary package level down to at least one secondary package level, where each of the at least one secondary package level comprises multiple of sub-packages, comprising:
• first logger device comprising a communication module configured to transmit position data to an external control computer, where the first logger device is configured to be arranged to the asset at the primary package level,
• multiple of second logger devices, each comprising a communication module for transmitting position data of each of the second logger devices to the external control computer, and each being arranged with a sub-package selected from the sub-packages,
• a first processing unit configured to operate the first and the multiple of second logger devices, where the processing includes turning the first logger device on during a transport of the primary package from an origin location to a first destination location while the second logger devices are in sleep-mode, where at the first destination location the primary package level is at least partialy unpacked into the at least one secondary package level, and
• a second processing unit configured to trigger the second logger devices in the sub-packages that are unpacked from the primary package level from sleep-mode to active mode and thus enabling a real-time position tracking on each of the sub-packages.

14. The system according to claim 13, wherein the first processing unit is the same as the second processing unit, or wherein the first processing unit is comprised in the first logger device and where the second processing unit is comprised in an external control computer.

15. The system according to claim 13 or 14, wherein the multiple of second logger devices further comprise at least one sensing unit to measure at least one environmental parameter of the asset, and where the communication module is further configured to transmit the measured at least one environmental related parameter.
